# EUROPEAN PATENT SPECIFICATION

(11) **EP 0 744 120 B1**
(45) Date of publication and mention of the grant of the patent: **11.12.2002**
(21) Application number: 96201497.3
(22) Date of filing: 28.05.1996
(51) Int. Cl.: A01D 31/00

(54) **Method and apparatus for harvesting and bunching agricultural produce and/of market garden produce**
Verfahren und Vorrichtung um Gemüsse zu Ernten und zu Bündeln
Méthode et appareil pour récolter et mettre en bottes de produits agricoles

(30) Priority: 26.05.1995 NL 1000441; 22.01.1996 NL 1002136
(43) Date of publication of application: 27.11.1996
(73) Proprietor: Koppert Machines B.V., 2681 RW Monster (NL)
(72) Inventor: Koppert, Arie Leendert, 2691 CM 's-Gravenzande (NL)
(74) Representative: Bartelds, Erik

(56) References cited:
- FR-A- 2 295 692
- FR-A- 2 582 468
- FR-A- 2 594 794
- US-A- 2 525 018

## Description

The invention relates to a method for mechanically harvesting and bunching agricultural and/or market garden produce, comprising of successively lifting products out of the ground, holding on their haulm and subjecting to a selection operation the lifted products, bringing together into a bunch a determined number of selected products and tying together the haulm of the bunch of products. Such a method is known from US-A-2.525,018 and is used for bunching root vegetables, like for instance radishes.

In the conventional (manual) bunching method the radish plants, which each consist of a tuber growing in the ground and a haulm protruding above the ground, are uprooted, picked up and collected by hand, whereafter the thus collected radish plants are bunched into a cluster by tying together (again by hand) the haulm thereof with a cord or elastic. This bunching of radish is heavy, unpleasant and time-consuming work since radish plants are relatively small and are placed close together. Finding sufficient manpower is therefore difficult, all the more so as the cultivation of radish takes little time (about three weeks), particularly in the summer, and these bunching operations must therefore be performed frequently. The wage costs involved herein moreover contribute to the relatively high cost price of the product.

The cited prior art document US-A-2,525,018 already discloses a vegetable harvester with which harvesting and bunching of root vegetables may be performed mechanically. This harvester comprises a frame carried by two wheels and pushed by an operator. At the front of the frame two runners or slides extend which define a central slot into which a row of vegetables to be harvested is received. A cutter or coulter projects down from each runner for stirring and loosening the soil adjacent the vegetables. The vegetables entering the central slot are pulled out of the ground by a pair of endless belts arranged to run over a rear pair of belt pulleys and a front pair of pulleys so that straight stretches of the belt run side by side. These belts are each arranged to run diagonally through the harvester, so that the straight stretches twist over and change sides, and the vegetables gripped between these portions of the belts will be inverted. Adjacent the discharge ends of the vegetable moving belts a sorter is provided, consisting of two parallell spaced apart rails, on which the larger vegetables are slid along, being pushed by vegetables coming from the belts, while smaller vegetables fall between these rails. The selected vegetables collect and form a bunch in an open area at the rear of the sorter, where a trip lever which is aligned with one of the sorter rails is gradually pushed back against spring force until a bunch of a desired size has been collected, after which the trip lever completes a connection and operates a conventional knotter and tier mechanism arranged at the rear of the sorter.

Bunching is hereby greatly simplified and speeded up, so that the cost price of a bunch is reduced and the temporary use each time of large numbers of workers can be prevented.

The invention therefore has for its object to further improve the mechanical harvesting and bunching method of the above described type. This is achieved according to the invention in that during selection thereof the products are separated and disentangled by tensioning.

The invention also has for its object to provide an apparatus for performing the above described method. To this end an apparatus as disclosed in US-A-2,525,018, which is provided with an apparatus for harvesting and bunching agricultural and/or market garden produce, provided with means for successively lifting products out of the ground, means connected to the lifting means for selecting the lifted products, means connected to the selection means for bringing together a determined number of selected products into a bunch and means for tying together the thus brought together bunch of products, is characterized in accordance with the present invention, by disentangling means integrated with the selection means and arranged for tensioning the lifted products.

Preferred embodiments of the apparatus according to the invention form the subject-matter of the dependent claims 3-17.

Finally, the invention further relates to disentangling means for use in an apparatus of the above described type.

The invention will now be elucidated on the basis of an example, wherein reference is made to the annexed drawing, in which:
Fig. 1 shows a cut away perspective view of the apparatus according to the invention,
Fig. 2 is a schematic perspective view of the lifting and reversing means of the apparatus,
Fig. 3 is a perspective view of a first embodiment of the restraining member of the apparatus,
Fig. 4 is a top view of the selection means of the apparatus,
Fig. 5 is a side view of the selection means,
Fig. 6 is a side view of a second embodiment of the restraining member of the apparatus according to the invention,
Fig. 7a-f show a schematic top view of an operational cycle of the tying means of the apparatus,
Fig. 8 shows a side view of disentangling means of the apparatus arranged downstreem of the lifting means and integrated with the selection means, and
Fig. 9 is an enlarged perspective detail view of the tying means with a closing and pushing member arranged in front thereof.

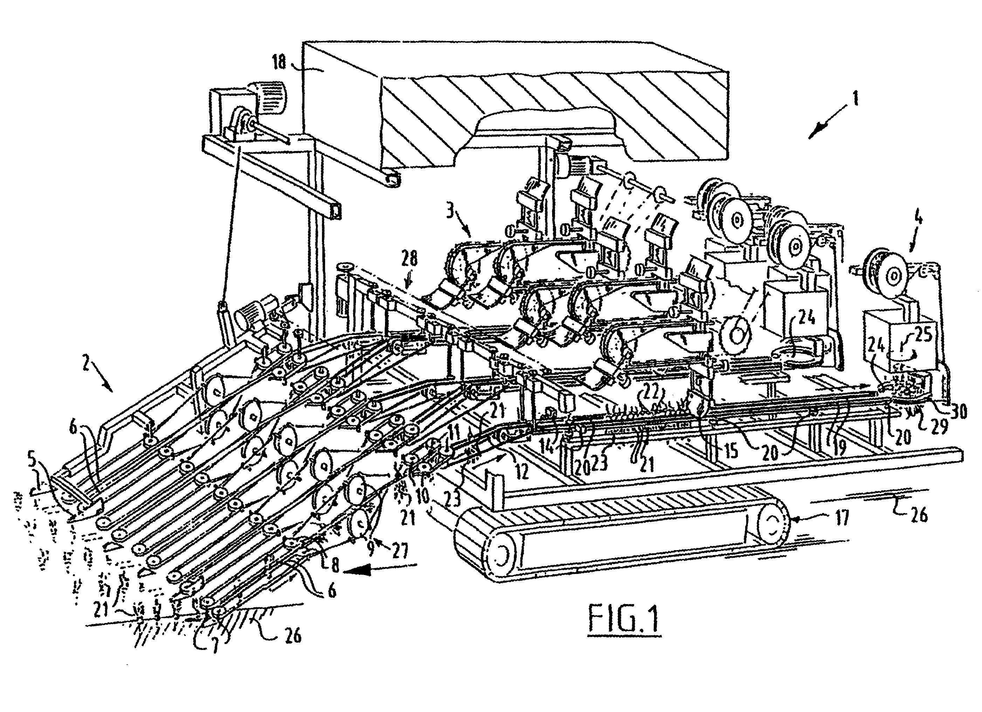

An apparatus 1 (fig. 1) for mechanically harvesting and bunching agricultural and/or market garden produce, such as for instance radish plants, comprises means 2 for successively lifting the plants 21 out of the 5 ground 26, means 27 for reversing the lifted plants 21, means 28 for selecting the reversed plants 21, means 3 for bringing together a determined number of plants 21 into a bunch 29 and means 4 for tying together the thus formed bunch 29.

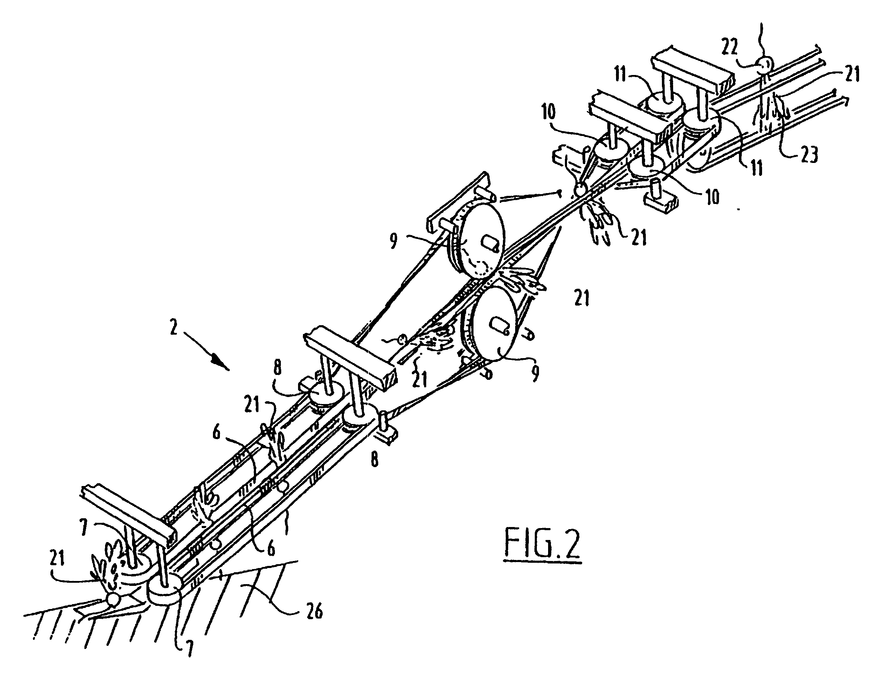

The lifting means 2 comprise lifting knives 31 movable under the plants 21 through the ground 26 and guide plates 5 connected thereto. The raised plants 21 are received between parallel endless clamping belts 6 which each move along a set of guide rollers 7,8,9,10,11. The axes of guide rollers 9 herein lie transversely of the axes of the preceding and following guide rollers 7,8 respectively 10,11, whereby the clamping belts 6 are tilted on their longitudinal axis and the plants 21 are turned over (fig. 2). In order to keep the harvesting depth constant the lifting means are arranged in a sub-frame 32 which is pivotally connected by means of a pivot connection 33 to the main frame 34 of the apparatus. Subframe 32 can herein be moved up and downward relative to main frame 34 by means of a hoist installation 35. The movement of sub-frame 32 is controlled by an optical sensor (not shown) which detects the course of the bed with plants 21.

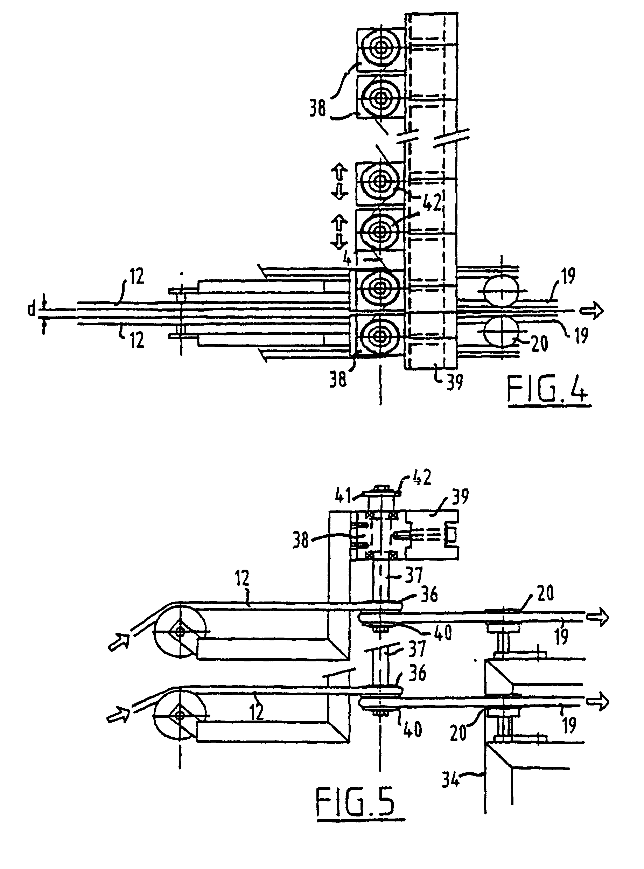

The plants 21 with their tubers 22 pointing upward and their haulm 23 pointing downward are transferred to the selection means 28 formed by parallel endless clamping belts 12. The mutual distance of the belts 12 herein determines the minimum size of the selected plants. In order to enable selection of different sizes the belts 12 are herein adjustable in transverse direction of each other. The reversing rollers 36 of belts 12 are arranged for this purpose on rotatable shafts 37 which in turn are bearing mounted in blocks 38 which are slidable in transverse direction along a guide beam 39 (fig. 4). Shafts 37 of mutually adjacent selection paths alternately take a relatively short and a relatively long form, whereby the selection paths are situated at different heights in frame 34 (fig. 5) and can therefore be placed relatively closely to each other in transverse direction. This enables an optimum adjustment range of the selection paths, for instance in the order of 5 mm to 30 mm, without the apparatus having to have a great width for this purpose. Also arranged on the drive shafts 37 of each selection path are the reversing rollers 40 of the further conveyor belts 19. The selection belts 12 and conveyor belts 19 are herein driven jointly by a continuous chain 41 which runs in a zigzag path over chain wheels 42 arranged on the top of shafts 37.

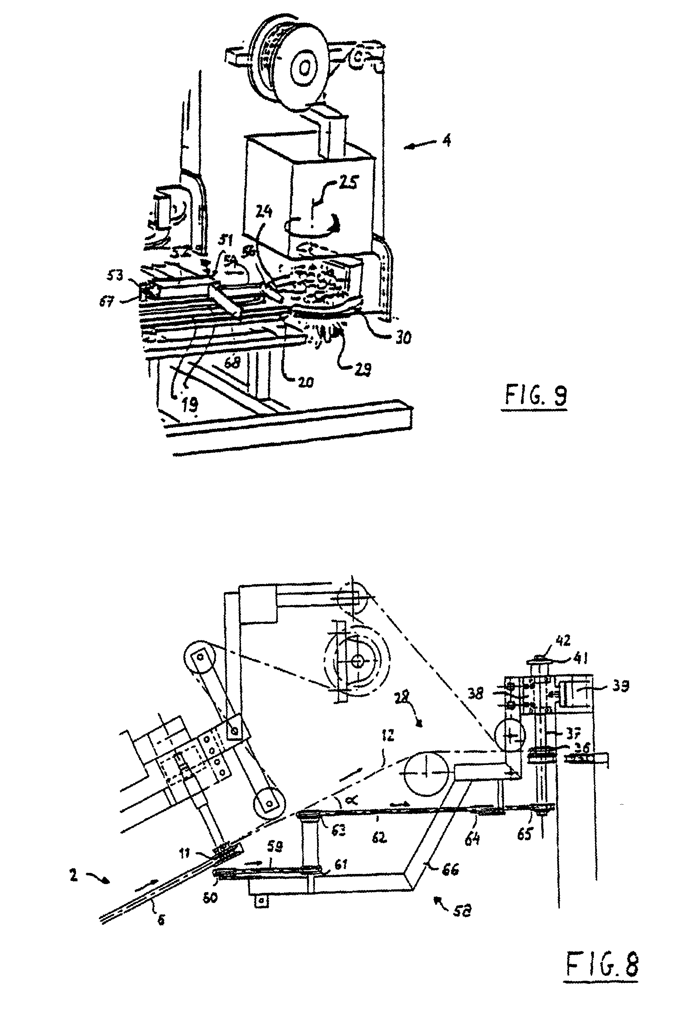

In order to prevent the plants 21 becoming entangled in each other with their haulm 23, thereby causing problems during selection and counting, in an alternative embodiment of the apparatus the plants 21 can be separated before selection. Present for this purpose downstreem of lifting means 2 and integrated with selection means 12 are disentangling means 58 (fig. 8) which are formed by the selection belts 12, which carry the tubers 22, and haulm transporting ropes 59 and 62. The distance between haulm transporting ropes 59, 62 respectively and the tuber transporting belts or selection belts 12 herein increases as seen in the transporting direction as a result of the fact that the haulm ropes 59, 62 enclose an angle α with the selection belt 12. The haulm ropes 59 and 62 are herein arranged in stepwise manner in a frame part 66 which is arranged on the front side of the apparatus. Each rope 59 is rotatable on two reversing rollers 60, 61, while ropes 62 are rotatable on reversing rollers 63 and 65 and an interposed guide roller 64. The forward reversing roller 63 of rope 62 is herein mounted on a common shaft with the rear reversing roller 61 of haulm rope 59, while the rear reversing roller 65 of the upper haulm rope 62 is arranged at the height of the reversing roller 36 of selection belt 12.

The haulm of each plant 21 is thus clamped between the adjacently located ropes 59 and carried along in the transporting direction. The ropes 59 herein move at a higher or lower speed than the selection belts 12, whereby a further additional force is exerted on product 21. Due to this additional force and the fact that the distance between the haulm rope 59 and the selection belt 12 increases, the product 21 with its tuber 22 is tensioned tightly on selection belt 12. Products 21 of which the haulm 23 is mutually entangled are hereby pulled apart, while undersize tubers 22 are moreover pulled through between the selection belts 12 and removed. Because mutually entangled products 21 are separated, errors in counting can also be prevented, while in addition problems which could occur during passage through the shafts of the reversing rollers can likewise be prevented. For an optimal separation and disentangling operation the disentangling means 58, as shown, take a double-action form with a lower haulm rope 59 and an upper haulm rope 62, although it will be apparent that more or fewer ropes can also be applied.

From the selection belts 12 the plants are subsequently guided past a counting means 14, for instance an electronic eye, whereafter they are held back by a restraining member, for instance an arm 15, until a determined, preset number of plants has passed the counting means 14. The restraining arm 15, which is arranged on an endless belt 16, is then moved out of the transport path of plants 12, whereby they can move further to the tying means 4. The following restraining arm 15 is simultaneously placed in the transport path. To prevent damage to the plants, the arm 15 is herein not only movable with the belt 16 but is also slidable in the direction transversely of the belt 16 to the position 15'. For this purpose arm 15 is arranged on two extending members 46 which are received for sliding in a block 47 and which are biased to the extended position by means of a spring 48. On the upper side one of the arms is provided with a roller 59 which runs along a guide track 60 connected to the frame 34 of the apparatus, whereby retraction and subsequent extension of the restraining arms 15 is controlled. The arm 15 thus skims over the leading plants of the following group before it is placed into the transport path.

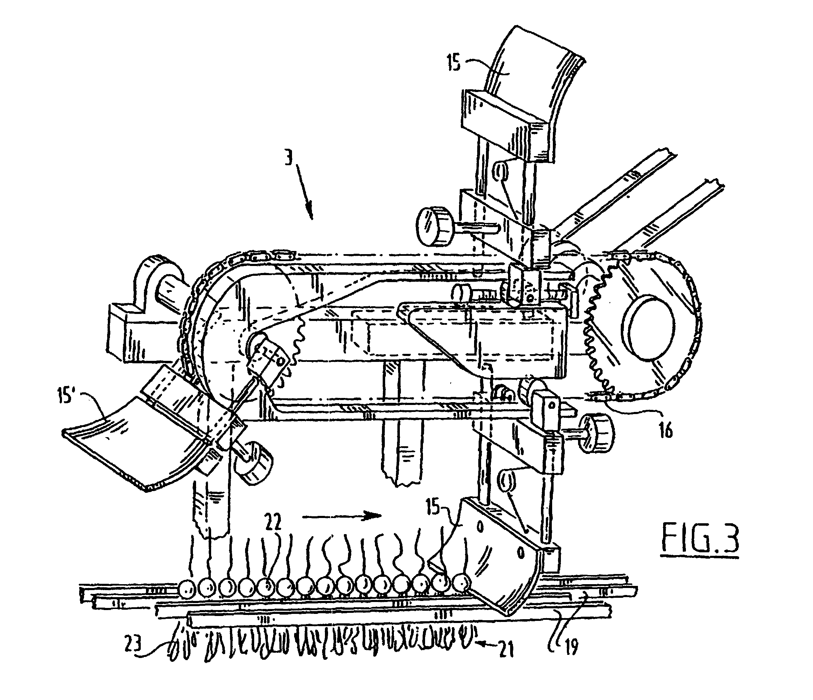

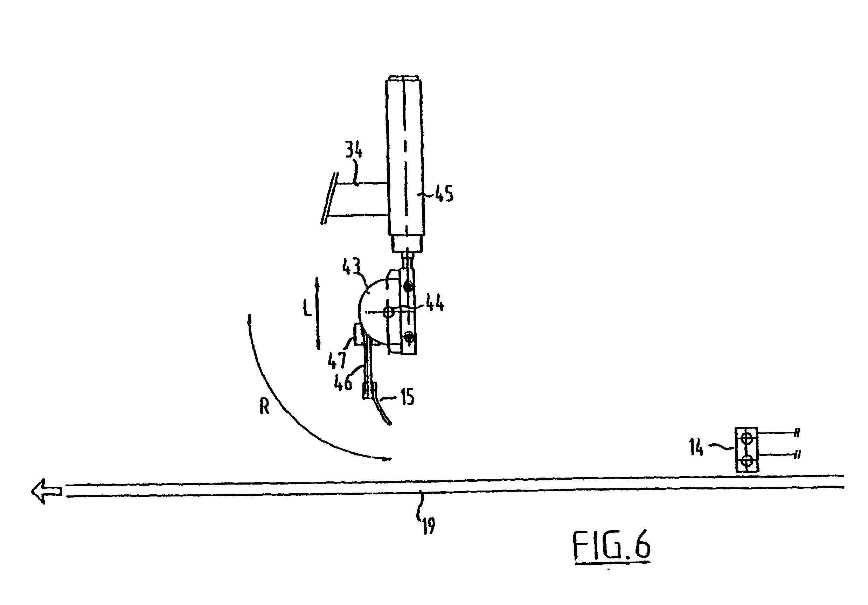

In an alternative embodiment only a single restraining arm 15 is arranged per transport path (fig. 6), which arm can execute a combined pivoting and sliding movement as according to arrows R and L. The arm 15 is herein suspended in similar manner as in the embodiment shown in fig. 3. Under the influence of a pneumatic lift cylinder 45 the arm 15 can be retracted counter to the force of spring 48 or be extended under the influence of the spring action, while in addition the whole arm construction can be pivoted round an axis 44 by means of a pneumatic rotating cylinder 43. When a determined number of plants 12 has passed the counting means 14, the restraining arm 15 can hereby be pivoted out of the path as according to arrow R, then be retracted by means of cylinder 45, pivoted back by cylinder 43 and finally moved back again into the transport path.

The group of plants released by restraining arm 15 is carried to the tying means 4 by parallel belts 19 movable along guide rollers 20 and there collected in a practically circular receiving space 24 of a movable discharge member 30. Due to the continuous feed of plants 21 the plants of the group are pressed together in this receiving space to a practically circular bunch 29 which is then tied together with a cord or elastic by a tying member. The discharge member 30 is then pivoted on a transverse pivot shaft 25, whereby the bunch 29 falls out of the receiving space 24 onto the ground 26.

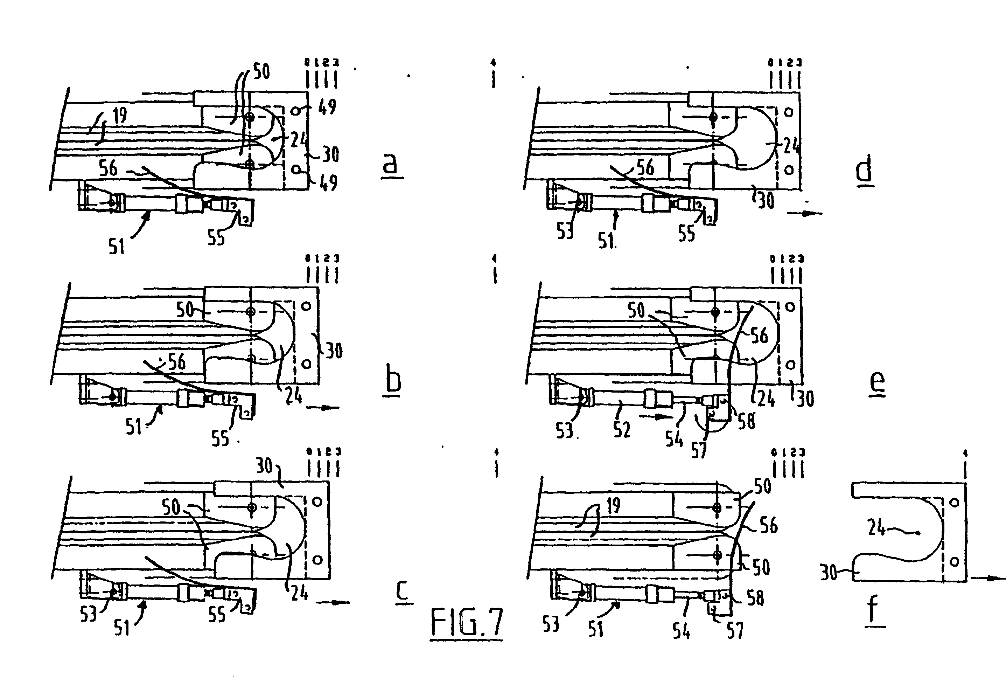

In an alternative embodiment (fig. 7) the discharge member 30 is arranged not pivotally but slidably in the line of the transport path. The member 30, which once again has a circle segment-like receiving space 24, is provided for this purpose with fixing points 49 with which it is suspended from a frame movable parallel to the transport path by a pneumatic cylinder. The discharge member 30 is herein slidable in stepwise manner in order to prevent damage to the plants for tying together. The stepwise sliding movement of discharge member 30 is herein controlled by the counting means 14 which also actuates restraining arm 15. Thus is ensured that each time the restraining arm 15 allows through a number of plants 21 the discharge member 30 shifts slightly in order to create sufficient space in the receiving space 24 in the line of the transport path. Thus is prevented that supplied plants 21 are held back by preceding plants while they are still situated between the conveyor belts 19, since this could result in damage to the plants.

Further arranged at the end of conveyor belts 19 above their (therefore not visible) reversing rollers are guide plates 50 by which the tubers of plants 21 are raised slightly, thus preventing them from coming into contact with the binding wire and ensuring that only the haulm is actually tied together. In order to form a compact bunch the transport path is further provided on its outer end with a slidable and pivotable pushing member 51. This latter comprises an arm 56 which is fixed onto an L-shaped head 55 which is in turn fixed to the outer end of a piston 54. Piston 54 is received in a cylinder 52 which is connected to the frame via a pivot connection 53.

The operation of the discharge member is as follows: In the starting position (fig. 7a) the discharge member is situated in its retracted position directly behind the transport path. When now the counting means has detected a first group of for instance 5 or 6 plants, the restraining arm 15 is activated, whereby the whole of this group is allowed through. At that moment the cylinder of the discharge member is also activated, whereby it is moved a step to the rear (fig. 7b) and space is created to receive the first group of plants. The restraining member 15 is now kept in its retracted position whereby a flow of plants is allowed through. The counting means 14 counts the number of passing plants and at regular intervals, for instance each time 5 plants have passed, sends a signal to the cylinder of discharge member 30 which is then shifted a step at a time (fig. 7c and 7d). A step could optionally be performed per passing plant but this hardly gives a better result in practice. When sufficient plants have eventually passed the counting means to form a bunch, the restraining member is re-placed into the transport path and the pushing member 51 is activated with a slight delay. The piston 54 is herein extended from cylinder 52 and the head 55 rotated on its fixing points 57 by exerting a tensile force, whereby the arm 56 presses together the tubers (fig. 7e). The tying device is then activated, whereby a wire or elastic is wound and fastened round the bunch, whereafter the discharge member is moved to its furthest end position and the bunch released (fig. 7f). The bunch can herein fall onto a conveyor belt (not shown) whereby it is carried to a crate. A crate can also be arranged directly beneath discharge member 30.

In an alternative embodiment of the tying means (fig. 9) the pushing member 51 is combined with a closing member 68 which extends in transverse direction over both conveyor belts 19. The combined closing and pushing member is once again embodied in the form of a cylinder 52 in which a piston 54 is slidable which is provided on its outer end with the actual pushing element 56 in the form of a pushing slide. The closing member 68 is herein fixed to the cylinder housing 52. Cylinder housing 52 is connected for pivoting on a lying shaft 53 to a part 67 of the frame. As in the above shown embodiment, the pushing element 56 has the purpose of pushing together the tubers 22 prior to tying together, whereby a compact bunch is formed. The closing member 68 serves herein to prevent products, which may possibly still be present between the transporting ropes 19 and which somehow or other have been delayed between the restraining arm 15 and the tying means, from still reaching the tying means at the precise moment that a tying operation is taking place there. The tying mechanism could hereby become jammed.

For this purpose the closing and pushing member is pivotable transversely of the plane of the transporting ropes 19 between the shown position in which closing member 68 extends over the transport path and closes it off, and an upward pivoted position in which the transport path is left clear. After a collection of products has been released by the restraining arms 15 the closing and pushing member is therefore pivoted downward with some delay until the closing member 68 is situated in the transport path. The delay is herein chosen such that at the moment of downward pivoting during normal operation all products allowed through by restraining arm 15 should have reached the tying means. Only when the closing and pushing member has been pivoted downward and thus closes the transport path, is the pushing element 56 pressed outward by the piston 54 against the bunch of products for tying, whereafter the tying operation can take place.

The different components described above can be assembled in a frame which is provided with a chassis 17, for instance a caterpillar chassis, and with a drive whereby it is independently mobile. The apparatus 1 is herein then further provided with control means 18 for controlling the operation of the different components. The control means 18 can be programmable and be formed for instance by a so-called PLC.

## Claims

1. Method for mechanically harvesting and bunching agricultural and/or market garden produce, comprising of successively lifting products (21) out of the ground (26), holding on their haulm (23) and 5 subjecting to a selection operation the lifted products (21), bringing together into a bunch (29) a determined number of selected products (21) and tying together the haulm (23) of the bunch (29) of products (21), **characterized in that** during selection thereof the products (21) are separated and disentangled by tensioning.

2. Apparatus (1) for harvesting and bunching agricultural and/or market garden produce, provided with means (2) for successively lifting products (21) out of the ground (26), means (28) connected to the lifting means (2) for selecting the lifted products (21), means (3) connected to the selection means (28) for bringing together a determined number of selected products (21) into a bunch (29) and means (4) for tying together the thus brought together bunch (29) of products (21), **characterized by** disentangling means (58) integrated with the selection means (28) and arranged for tensioning the lifted products (21).

3. Apparatus (1) as claimed in claim 2, **characterized in that** the disentangling means (58) comprise at least one product conveyor (12) and at least one haulm conveyor (59, 62) arranged along the product conveyor (12) with an interspace which increases in the transporting direction.

4. Apparatus (1) as claimed in claim 3, **characterized in that** the product conveyor (12) and the haulm conveyor (59, 62) are driven at different speeds.

5. Apparatus (1) as claimed in any of the claims 2-4, **characterized in that** the bunching means (3) comprise at least one counting means (14) and a restraining member (15) controllable thereby and movable in and out of a transport path of the products (21).

6. Apparatus (1) as claimed in claim 5, **characterized in that** the restraining member (15) is pivotable along the transporting direction and slidable transversely of the transporting direction.

7. Apparatus (1) as claimed in claim 6, **characterized in that** the restraining member (15) comprises a number of restraining arms (15) arranged on an endless belt (16) and extensible relative thereto.

8. Apparatus (1) as claimed in any of the claims 2-7, **characterized in that** the tying means (4) comprise a movable discharge member (30) having at least one substantially circle segment-like receiving space (24) for the bunch (29).

9. Apparatus (1) as claimed in claim 8, **characterized in that** the discharge member (30) is substantially L-shaped and pivotable on an axis (25) placed substantially transversely of the transport path of the products (21).

10. Apparatus (1) as claimed in claim 8, **characterized in that** the discharge member (30) is slidable along the transport path of the products (21).

11. Apparatus (1) as claimed in claim 10, **characterized in that** the discharge member (30) is slidable in stepwise manner.

12. Apparatus (1) as claimed in any of the claims 5-11, **characterized by** a closing and pushing member (51, 68) arranged between the restraining member (15) and the tying means (4).

13. Apparatus (1) as claimed in claim 12, **characterized in that** the closing and pushing member (51, 68) is displaceable substantially transversely of the transport path and comprises at least one pushing element (56) movable in the transporting direction.

14. Apparatus (1) as claimed in any of the claims 2-13, **characterized in that** the lifting means (2), bunching means (3) and tying means (4) are electronically controllable.

15. Apparatus (1) as claimed in any of the claims 2-14, **characterized in that** the lifting means (2), bunching means (3) and tying means (4) are accommodated in a mobile frame (17, 34).

16. Apparatus (1) as claimed in claim 15, **characterized in that** the lifting means (2) are arranged in a sub-frame (32) which is height-adjustable relative to the mobile frame (17,34).

17. Apparatus (1) as claimed in any of claims 2-16, **characterized in that** the selection means (28) comprise two conveyor belts (12) arranged with adjustable interspacing.

18. Disentangling means (58) for use in an apparatus (1) as claimed in any of claims 2-17, comprising at least one product conveyor (12) and at least one haulm conveyor (59, 62) arranged along the product conveyor (12) with an interspace which increases in the transporting direction.

## Patentansprüche

1. Verfahren zum maschinellen Ernten und Bündeln von Landwirtschafts- und/oder Handels-Garten-Produkten, wobei nacheinander Produkte (21) aus dem Erdboden (26) aufgenommen werden, die aufgenommenen Produkte (21) an ihren Stengeln (23) gehalten werden und einem Selektionsvorgang unterzogen werden, eine vorbestimmten Anzahl von selektierten Produkten (21) zu einem Bündel (29) zusammengebracht werden und die Stengel (23) des Bündels (29) von Produkten (21) zusammengeschnürt werden, **dadurch gekennzeichnet, dass** die Produkte (21) während ihrer Selektion mittels unter Zugspannung Setzens separiert und entflochten werden.

2. Vorrichtung (1) zum Ernten und Bündeln von Landwirtschafts- und/oder Handels-Garten-Produkten, mit Mitteln (2) zum nacheinander Aufnehmen von Produkten (21) aus dem Erdboden (26), mit den Aufnehmmitteln (2) gekuppelten Mitteln (28) zum Selektieren der aufgenommenen Produkte (21), mit den Selektionsmitteln (28) gekuppelten Mitteln (3) zum Zusammenbringen einer vorbestimmten Anzahl von selektierten Produkten (21) zu einem Bündel (29) und Mitteln (4) zum Zusammenschnüren des auf diese Weise zusammengebrachten Bündels (29) von Produkten (21), **gekennzeichnet durch** Entwirrmittel (58), die mit den Selektionsmitteln (28) integral sind und vorgesehen sind, um die aufgenommenen Produkte (21) unter Zugspannung zu setzen.

3. Vorrichtung (1) wie in Anspruch 2 beansprucht, **dadurch gekennzeichnet, dass** die Entwirrmittel (58) zumindest einen Produktförderer (12) und zumindest einen Stengelförderer (59, 62) aufweisen, der entlang des Produktförderers (12) mit einem Zwischenraum angeordnet ist, welcher sich in der Transportrichtung vergrößert.

4. Vorrichtung (1) wie in Anspruch 3 beansprucht, **dadurch gekennzeichnet, dass** der Produktförderer (12) und der Stengelförderer (59, 62) mit unterschiedlichen Geschwindigkeiten angetrieben sind.

5. Vorrichtung (1) wie in einem der Ansprüche 2-4 beansprucht, **dadurch gekennzeichnet, dass** das Bündelmittel (3) zumindest ein Zählmittel (14) und ein durch dieses steuerbares und innerhalb und außerhalb einer Transportbahn der Produkte (21) bewegbares Stopperteil (15) aufweist.

6. Vorrichtung (1) wie in Anspruch 5 beansprucht, **dadurch gekennzeichnet, dass** das Stopperteil (15) entlang der Transportrichtung schwenkbar und quer zur Transportrichtung verschiebbar ist.

7. Vorrichtung (1) wie in Anspruch 6 beansprucht, **dadurch gekennzeichnet, dass** das Stopperteil (15) eine Anzahl von Stopperarmen (15) aufweist, die an einem Umlaufriemen (16) angeordnet und relativ dazu ausziehbar sind.

8. Vorrichtung (1) wie in einem der Ansprüche 2-7 beansprucht, **dadurch gekennzeichnet, dass** das Verschnürmittel (4) ein bewegbares Entladeelement (30) mit zumindest einem im Wesentlichen kreissegmentähnlichen Aufnahmeraum (24) für das Bündel (29) aufweist.

9. Vorrichtung (1) wie in Anspruch 8 beansprucht, **dadurch gekennzeichnet, dass** das Entladeelement (30) im Wesentlichen L-förmig und um eine Achse (25) schwenkbar ist, die im Wesentlichen quer zur Transportbahn der Produkte (21) angeordnet ist.

10. Vorrichtung (1) wie in Anspruch 8 beansprucht, **dadurch gekennzeichnet, dass** das Entladeelement (30) entlang der Transportbahn der Produkte (21) verschiebbar ist.

11. Vorrichtung (1) wie in Anspruch 10 beansprucht, **dadurch gekennzeichnet, dass** das Entladeelement (30) schrittweise verschiebbar ist.

12. Vorrichtung (1) wie in einem der Ansprüche 5-11 beansprucht, **dadurch gekennzeichnet, dass** zwischen dem Stopperteil (15) und dem Verschnürmittel (4) ein Schließ- und Druckteil (51, 68) angeordnet ist.

13. Vorrichtung (1) wie in Anspruch 12 beansprucht, **dadurch gekennzeichnet, dass** das Schließ- und Drückteil (51, 68) im Wesentlichen quer zur Transportbahn verlagerbar ist und zumindest ein Drückelement (56) aufweist, das in der Transportrichtung bewegbar ist.

14. Vorrichtung (1) wie in einem der Ansprüche 2-13 beansprucht, **dadurch gekennzeichnet, dass** die Aufnehmmittel (2), die Bündelmittel (3) und die Verschnürmitte1 (4) elektronisch steuerbar sind.

15. Vorrichtung (1) wie in einem der Ansprüche 2-14 beansprucht, **dadurch gekennzeichnet, dass** die Aufnehmmittel (2), die Bündelmittel (3) und die Verschnürmittel (4) in einem mobilen Rahmen (17, 34) aufgenommen sind.

16. Vorrichtung (1) wie in Anspruch 15 beansprucht, **dadurch gekennzeichnet, dass** die Aufnehmmittel (2) in einem Hilfsrahmen (32) angeordnet sind, welcher relativ zum mobilen Rahmen (17, 34) höhenverstellbar ist.

17. Vorrichtung (1) wie in einem der Ansprüche 2-16 beansprucht, **dadurch gekennzeichnet, dass** das Selektionsmittel (28) zwei Förderriemen (12) aufweist, die mit verstellbarem Zwischenraum angeordnet sind.

18. Entwirrmittel (58) für die Verwendung in einer Vorrichtung (1) wie in einem der Ansprüche 2-17 beansprucht, die zumindest einen Produktförderer (12) und zumindest einen Stengelförderer (59, 62) aufweist, der entlang des Produktförderers (12) mit einem Zwischenraum angeordnet ist, welcher sich in der Transportrichtung vergrößert.

## Revendications

1. Procédé pour récolter et botteler mécaniquement des produits agricoles et/ou horticoles, consistant à arracher successivement les produits (21) de la terre (26), à les tenir par leurs fanes (23) et à soumettre les produits (21) arrachés à une opération de sélection, à réunir en une botte (29) un nombre déterminé de produits (21) sélectionnés et lier ensemble les fanes (23) de la botte (29) de produits (21), **caractérisé en ce que**, pendant leur sélection, les produits (21) sont séparés et démêlés par l'application d'une tension.

2. Machine (1) destinée à récolter et botteler des produits agricoles et/ou horticoles équipée de moyens (2) destinés à arracher successivement les produits (21) de la terre (26), de moyens (28) reliés aux moyens d'arrachage (2) pour sélectionner les produits (21) arrachés, de moyens (3) reliés aux moyens de sélection (28), destinés à réunir en une botte (29) un nombre déterminé de produits (21) sélectionnés, et de moyens (4) destinés à lier ensemble la botte (29) de produits (21) ainsi réunie, **caractérisée par** des moyens de démêlement (58) intégrés aux moyens de sélection (28) et agencés pour exercer une tension sur les produits arrachés (21).

3. Machine (1) selon la revendication 2, **caractérisée en ce que** les moyens de démêlement (58) comprennent au moins un transporteur de produits (12) et au moins un transporteur de fanes (59, 62) agencé le long du transporteur de produits (12) avec un espace intercalaire qui croît dans la direction du transport.

4. Machine (1) selon la revendication 3, **caractérisée en ce que** le transporteur de produits (12) et le transporteur de fanes (59, 62) sont entraînés à des vitesses différentes.

5. Machine (1) selon une quelconque des revendications 2-4, **caractérisée en ce que** les moyens de bottelage (3) comprennent au moins un moyen de comptage (14) et un élément de retenue (15) qui peut être commandé par ce moyen et qui est mobile pour se placer dans d'un couloir de transport des produits (21) et en dehors de ce couloir.

6. Machine (1) selon la revendication 5, **caractérisée en ce que** l'élément de retenue (15) peut pivoter le long de la direction de transport et coulisser transversalement à la direction de transport.

7. Machine (1) selon la revendication 6, **caractérisée en ce que** l'élément de retenue (15) comprend un certain nombre de bras de retenue (15) arrangés sur une courroie sans fin (16) et qui peuvent être mis en extension par rapport à celle-ci.

8. Machine (1) selon une quelconque des revendications 2-7, **caractérisée en ce que** les moyens de liage (4) comprennent un élément de déchargement mobile (30) ayant au moins un espace récepteur (24) sensiblement analogue à un segment de cercle pour la botte (29).

9. Machine (1) selon la revendication 8, **caractérisée en ce que** l'élément de déchargement (30) est sensiblement en forme de L et peut pivoter sur un axe placé sensiblement transversalement au couloir de transport des produits (21).

10. Machine (1) selon la revendication 8, **caractérisée en ce que** l'élément de déchargement (30) peut coulisser le long du couloir de transport des produits (21).

11. Machine (1) selon la revendication 10, **caractérisée en ce qu'**on peut faire coulisser l'élément de déchargement (30) pas à pas.

12. Machine (1) selon une quelconque des revendications 5-11, **caractérisée par** un élément de fermeture et de poussée (51, 68) agencé entre l'élément de retenue (15) et les moyens de liage (4).

13. Machine (1) selon la revendication 12, **caractérisée en ce que** l'élément de fermeture et de poussée (51, 68) peut être déplacé sensiblement transversalement au couloir de transport et qu'il comprend au moins un élément de poussée (56) qui peut être déplacé dans la direction de transport.

14. Machine (1) selon une quelconque des revendications 2-13, **caractérisée en ce que** les moyens d'arrachage (2), les moyens de bottelage (3) et les moyens de liage (4) peuvent être commandés électroniquement.

15. Machine (1) selon une quelconque des revendications 2-14, **caractérisée en ce que** les moyens élévateurs (2), les moyens de bottelage (3) et les moyens de liage (4) sont logés dans un châssis mobile (17, 34).

16. Machine (1) selon la revendication 15, **caractérisée en ce que** les moyens élévateurs (2) sont agencés dans un sous-châssis (32) qui est réglable en hauteur par rapport au châssis mobile (17, 34).

17. Machine (1) selon une quelconque des revendications 2-16, **caractérisée en ce que** les moyens de sélection (28) comprennent deux courroies transporteuses (12) arrangées avec un espace intercalaire ajustable.

18. Moyens de démêlement (58) destinés à être utilisés dans une machine (1) selon une quelconque des revendications 2-17, comprenant au moins un transporteur de produits (12) et au moins un transporteur de fanes (59,62) agencé le long du transporteur de produits (12) avec un espace intercalaire qui croît dans la direction de transport.
